# EUROPEAN PATENT APPLICATION

(11) **EP 4 661 402 A1**
(43) Date of publication of application: **10.12.2025**
(21) Application number: 24305896.3
(22) Date of filing: 06.06.2024
(51) Int. Cl.: H04N 19/20, G06N 3/0455, G06N 3/08, G06N 3/098, G06T 9/00, G06T 13/40

(54) **BODY-PARTS ANIMATION MODELING**

(71) Applicant: InterDigital CE Patent Holdings, SAS, 75017 Paris (FR)
(72) Inventor: AVRIL, Quentin, 35830 BETTON (FR); GOSSELIN, Philippe Henri, 35235 THORIGNE-FOUILLARD (FR); DE CLERMONT GALLERANDE, Philippe, 35700 RENNES (FR)
(74) Representative: Vossius & Partner Patentanwälte Rechtsanwälte mbB

(57) **Abstract**

Methods and apparatus are provided for training a body-parts model that is split into portions and then training a network of corresponding parts entirely independent from its neighbor. In one embodiment, training is performed on different parts of a model with different parts of input data, representing human movement. In another embodiment, specific body parts are independent and weighted based on a loss specific to each body part. In other embodiments, the trained model is encoded and subsequently decoded. The decoded data is concatenated to build a total human skeletal model.

## Description

### TECHNICAL FIELD

At least one of the present embodiments generally relates to a method or an apparatus for modeling of body parts for animation.

### BACKGROUND

The general aspects described herein relate to approaches for modeling of body parts for animation.

### SUMMARY

At least one of the present embodiments generally relates to a method or an apparatus for modeling of body parts for animation.

According to a first aspect, there is provided a method. The method comprises steps for splitting a body parts model of an input animation into a plurality of sub-parts; and, encoding the plurality of sub-parts.

According to a second aspect, there is provided another method. The method comprises steps for decoding a data stream comprising a plurality of sub-parts of a body-parts model; and, concatenating the decoded sub-parts of the body-parts model.

According to another aspect, there is provided an apparatus. The apparatus comprises a processor and a memory. The processor can be configured to operate according to the aforementioned methods.

According to another aspect, there is provided an apparatus. The apparatus comprises a processor and a memory. The processor can be configured to encode or decode display data by executing any of the aforementioned methods.

According to another general aspect of at least one embodiment, there is provided a device comprising an apparatus according to any of the decoding embodiments; and at least one of (i) an antenna configured to receive a signal, the signal including the video block, (ii) a band limiter configured to limit the received signal to a band of frequencies that includes the video block, or (iii) a display configured to display an output representative of the video block.

According to another general aspect of at least one embodiment, there is provided a non-transitory computer readable medium containing data content generated according to any of the described encoding embodiments or variants.

According to another general aspect of at least one embodiment, there is provided a signal comprising video data generated according to any of the described encoding embodiments or variants.

According to another general aspect of at least one embodiment, video data or a bitstream is formatted to include data content generated according to any of the described encoding embodiments or variants.

According to another general aspect of at least one embodiment, there is provided a computer program product comprising instructions which, when the program is executed by a computer, cause the computer to carry out any of the described decoding embodiments or variants.

These and other aspects, features and advantages of the general aspects will become apparent from the following detailed description of exemplary embodiments, which is to be read in connection with the accompanying drawings.

### BRIEF DESCRIPTION OF THE DRAWINGS

Figure 1 illustrates position of joints for the MPEG reference geometrical model.
Figure 2 illustrates representation of a human skeleton as separated graphs.
Figure 3 illustrates a noisy context of full body skeleton reconstruction after encoding and decoding.
Figure 4 illustrates an example of four different skeleton split configurations.
Figure 5 illustrates an inference scheme of body parts models depending on their number of sub-models.
Figure 6 illustrates possible generic training processes for a body parts model with n sub-models.
Figure 7 illustrates animation of a chimera using various body parts sub-models.
Figure 8 illustrates one embodiment of an encoding method under the described aspects.
Figure 9 illustrates one embodiment of a decoding method under the described aspects.
Figure 10 illustrates one embodiment of an apparatus under the described aspects.
Figure 11 illustrates a standard, generic, video compression scheme.
Figure 12 illustrates a standard, generic, video decompression scheme.
Figure 13 illustrates a processor-based system for encoding/decoding under the general described aspects.

### DETAILED DESCRIPTION

The described aspects relate to a method for modeling of body parts for animation.

The context of the described embodiments is skeleton representation for body animation in computer graphics. The embodiments describe a new way to represent and process skeleton for doing 3D characters animation.

The embodiments describe how to split a virtual character's skeleton into several smaller graphs and learn from them separately. The embodiments bring several benefits, including the creation of a more semantic latent space and comparable or better performance on standard reconstruction metrics in ideal and noisy contexts, while having an overall smaller model.

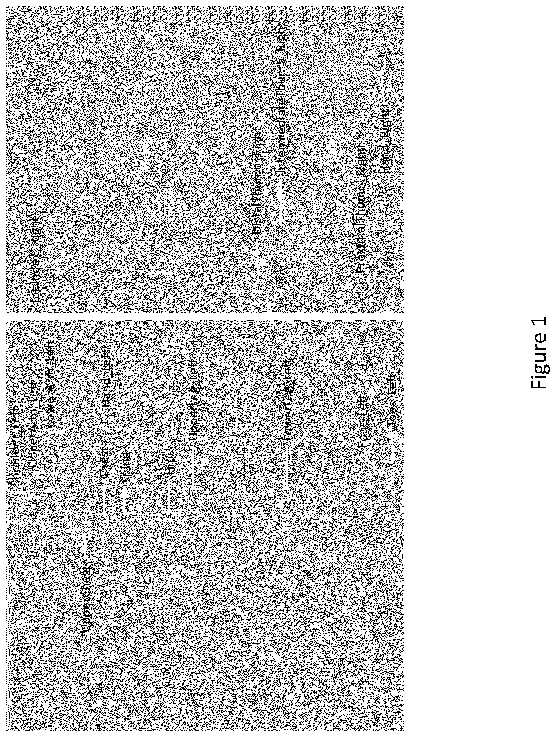

Current solutions to represent virtual character's skeleton are mostly considering the skeleton as a whole object. It is seen as one single connected graph as illustrated in Figure 1.

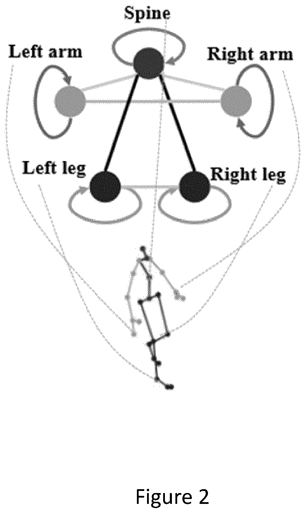

More recently, new approaches were proposed that present a new way to represent the human skeleton. Indeed, the skeleton was not anymore considered as a whole but as a collection of connected sub-graphs. It has allowed separated deep learning networks to learn independently each body part as the human body is a good example of separate but well related components. This type of approach is illustrated in Figure 2.

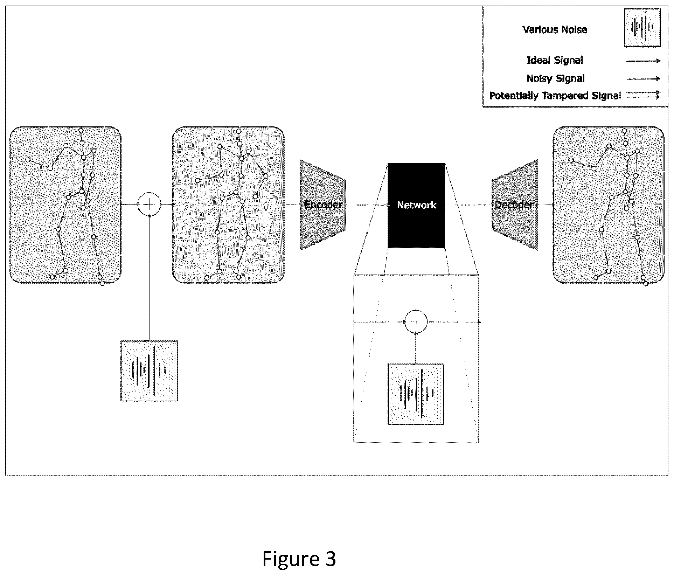

The problem to be solved by this invention is a better motion reconstruction in noisy contexts, while having an overall smaller model to represent the human skeleton for body animation. Figure 3 illustrates this issue when having (from left to right):
(A) - A ground-truth animation data (from a real person)
(B) - A tracking device capturing the animation
(C) - In between the purple and pink boxes, there is some noise perturbating the signal
(D) - An encoder encoding the captured signal
(E) - The code is transmitted through the network (black box)
(F) - Some noise is perturbating the network
(G) - A decoder decodes the code into animation data

The following sections describe how to define a body-parts model, how to split and concatenate the sub-models and how to perform the training.

### Body-parts Model

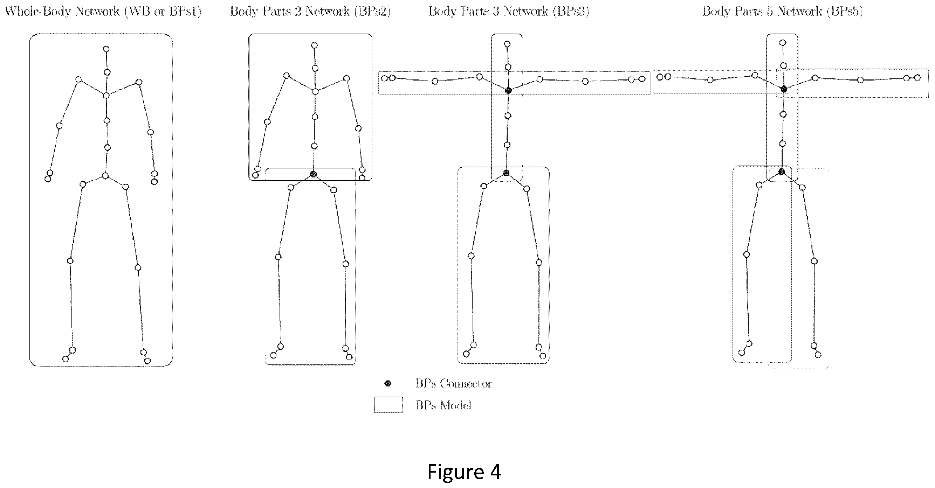

The proposed solution splits the graph into several parts. Each of these sub-graphs could then be used to train a network entirely independent from its neighbor. For example, we can create three different architectures. Let's call them *BPs2, BPs3* and *BPs5* depending on the number of body parts included (see Figure 4). Figure 4 shows, from left to right, full-body, two body parts (upper and lower), 3 body parts (arms, legs, and trunk) and 5 body parts (left arm left leg, right arm, right leg, and trunk). The last architecture, *BPs1,* is the model trained on the whole body (also called *BPs1* for coherency) and is used as a baseline for comparison. At this point, the main difference with other body parts approaches, is that this approach explicitly discards long-range correlations. For instance, with a Body-Part Model, bending an arm will have no incidence on the knees' orientation. Although this might be an issue for modeling locomotion, it can become an unwanted artifact in other cases, such as carrying an object. More formally, if we have some animation data X with T frames, F features and an entire skeleton of J joints X ∈ RT×J×F , the model of a body part will learn on X_{bp} ∈ RT×J_{bb}×F with J_{bp} c J the joints of the corresponding sub graph. In our context, this also means that by training a "sub"-model on this part of the data, we can easily synthesize an animation solely for the concerned joints. For example, we could generate the animation of an arm moving alone, or possibly attach it to an arbitrary kinematic chain, maybe creating a chimera, and still recognize its local motion. The opposite operation is also true, since we could remove a body-part model, for instance to learn on a dataset of disabled people or model their motions without the artifacts that a simple ablation of the skeleton could produce because of long-range dependencies.

### Splitting and Concatenation

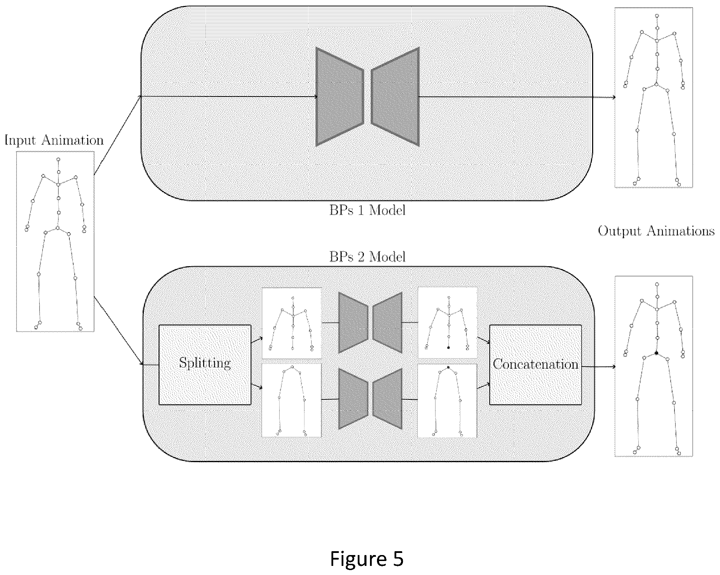

Since we might still want to obtain a full human-like skeleton at the end of the inference process of a Body-Parts Model, we design a strategy to concatenate the different sub-graphs. As emphasized by the solid dots in Figure 4, each of them is still a tree on which a Forward Kinematics can be performed. In other words, all the body parts are ordered graphs equipped with their own, local, root that might bring redundant information with the joints of a neighbor part. Since these connectors describe in effect the long-range correlations between body parts in the reconstructed skeleton, we give priority to an arbitrarily chosen body part to regress them. In this prospect, we give the sub-model that learns the Hips and the arms connection to the torso the full priority to act as the maestro. This choice is motivated by the relatively easy task of predicting the spine movements in comparison to the limbs, and the intuitiveness of having the torso and hips leading the overall motion. It could be perceived as a special case of performing an interpolation between the predictions of the same joint data by two models, with one of the weights at 1, and the other at 0. The global parts of each sub-graph root can easily be removed to ensure the networks only learn the local manifold. However, that case is not described herein, since it would mostly benefit the Body-Parts models. This strategy of concatenation was in particular used to design a Body-Parts meta-model able to behave like a regular whole-body model, by splitting any input data along the joints dimension, inferring the corresponding sub-models and re-concatenating to obtain a regular skeleton animation as output. The splitting part is straightforward and taken care of by several masks along the joints dimension. These masks are also applied on the adjacency matrix of the skeleton to obtain the sub-graphs topography. Although this meta-model is not strictly necessary for any of those tasks, it proved useful for tracking the performances at training and testing time, by providing a wrapper comparable to the whole-body model (see Figure 5). On the top row of Figure 5 is shown an inference with a single unitary whole-body skeleton. There is no need to split and concatenate, whereas on the bottom row, the model used is a 2-parts body. Before encoding, the skeleton is split into two parts and concatenated after decoding to recreate the whole skeleton.

### Training

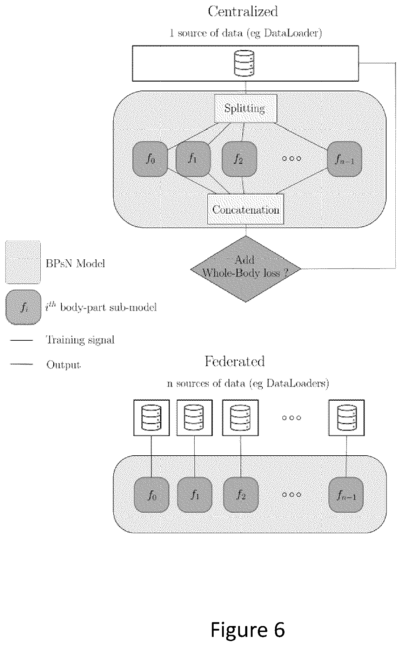

The Body-Parts approach is fundamentally modular, which makes it much more flexible than a monolithic whole-body modeling. This can be exploited during training on several aspects. Two training schemes are now introduced, adapted to these architectures, each with its different advantages (see Figure 6 for a more visual explanation). In Figure 6, the top row shows an example of centralized learning where all networks are trained with the same data source. On the bottom row is an example of federated learning. It is a technique that involves training different parts of a model with different parts of the data.

### Federated

Federated Learning is a technique that involves training different parts of a model with different parts of the data. Traditionally, it is used to keep the data local and private, and still send the locally trained parts of the model to gather them. The training scheme under the described aspects is extremely similar to this technique, since each of the body-parts sub-models can be trained on possibly completely different datasets. The main constraint being, of course, that the topology of the input and expected data are the same. But we could easily have the lower-part of the body train on a properly masked locomotion dataset, while the upper-body could learn boxing techniques. This also means that we could have most of the body-parts learn on a standard dataset and have one body-part sub-model follow a curriculum crafted by an expert animator. This could lead to an hybridization of the generation process, with "interesting" (wrt the application) parts of the body learning on few specific local motions. An additional benefit is the possibility of splitting the training of each body-part on different GPUs to speed up the learning. However, this training scheme focuses on the independence of the body-parts and does not allow any kind of porosity between them. Furthermore, it makes it more difficult to compare a Body-Parts Model and a Whole-Body one, in particular during training.

### Centralized

The Centralized scheme is more intuitive, and from a high point-of-view follows the traditional training of a human motion modeling task. In short: we have one source of data animation with all the necessary skeleton data, that we use as a training signal for our networks. For the Whole-Body Model, the process is straightforward, and for a Body-Parts Model, the wrapper created with the splitting and concatenation operations can provide an interface to train on the same data. However, in particular with the current concatenation algorithm, we are not exploiting the full potential of each network this way. To do so, we can leverage the tree structure of each skeleton sub-graph, and compute a loss specific to each body-part. Furthermore, as highlighted earlier, adding a loss on the whole-body prediction is straightforward and could allow the crafting of specific, body-parts dependent, local losses and general, skeleton dependent, global losses. This could be used to improve, or fine-tune, inter-body-parts correlations for instance to prevent standard interpenetration issues. The end result of optimizing specific weights on corresponding parts of the loss can also be achieved through masking, but our approach treats it explicitly and makes the whole process much more intuitive. Although the body-parts approach brings many interesting features, its main goal is still to model the human body motion. To test it on a toy scenario, we decided to focus on a simple reconstruction task that will be described in the next section.

### Comparison

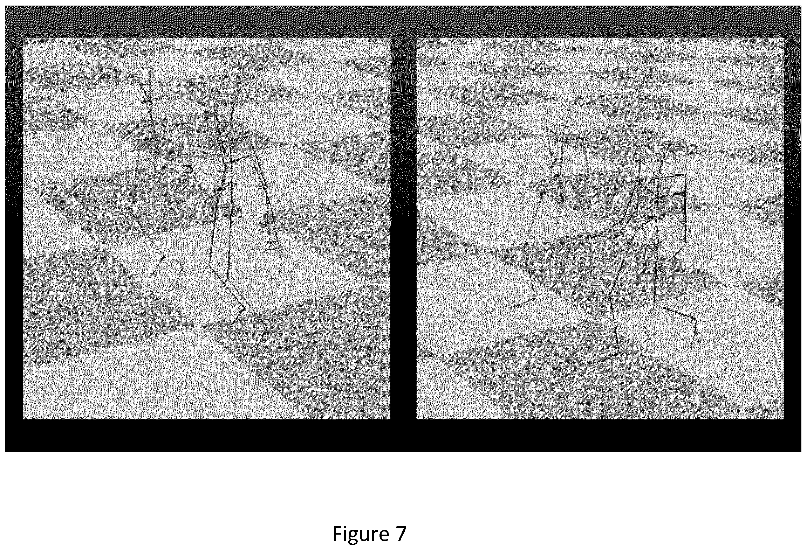

Described here are the points of distinction between the proposed work and the seminal work of Jain et al. and other derived works. The main difference is that the proposed approach explicitly does not consider inter-body-parts correlations. They are independent as pointed out. Even though some information is lost, it results in a fully modular representation of the body motion. For instance, we can mix body-parts motions as desired (e.g. create chimeras (see Figure 7), generate some parts and reconstruct others, or even remove them entirely), or their representation by different architectures. Figure 7 shows animation of a chimera using various body-parts sub-models. Here the original skeleton motion is reconstructed by several Auto-Encoders (AE) and the additional arms are generated by Variational AEs trained on the arms. Another hypothesis is that these correlations inter-body-parts might be dataset-specific. And explicitly not learning them could improve generalization on other datasets. Furthermore, we obtain an explicitly semantic latent vector than can be used to transmit only one body-part information at a time (updating a reconstructed skeleton for instance), double it to transmit redundant information on a crucial body-part (wrt application, for instance you might want to be sure that the arms and spine+head won't be noisy in a visioconference setting with people seated, but you would not care much about the legs). There are other advantages, including during training, but those are not described here.

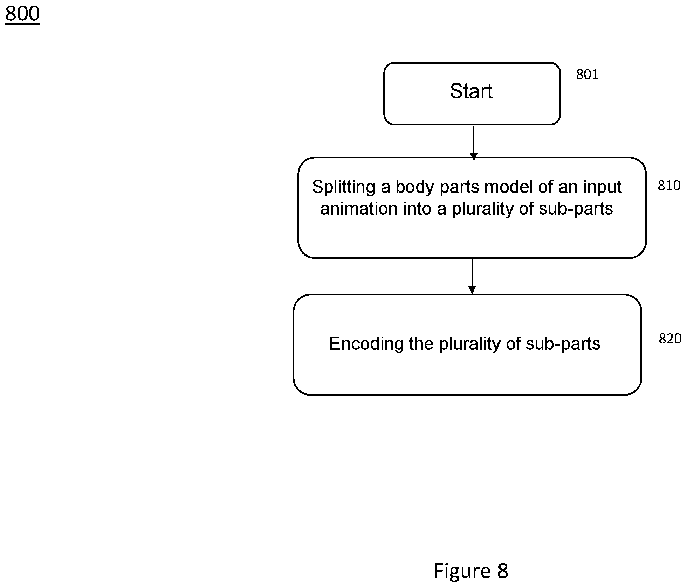

One embodiment of a method 800 under the general aspects described here is shown in Figure 8. The method commences at start block 801 and control proceeds from block 801 to block 810 for splitting a body parts model of an input animation into a plurality of sub-parts. Control proceeds from block 810 to block 820 for encoding the plurality of sub-parts.

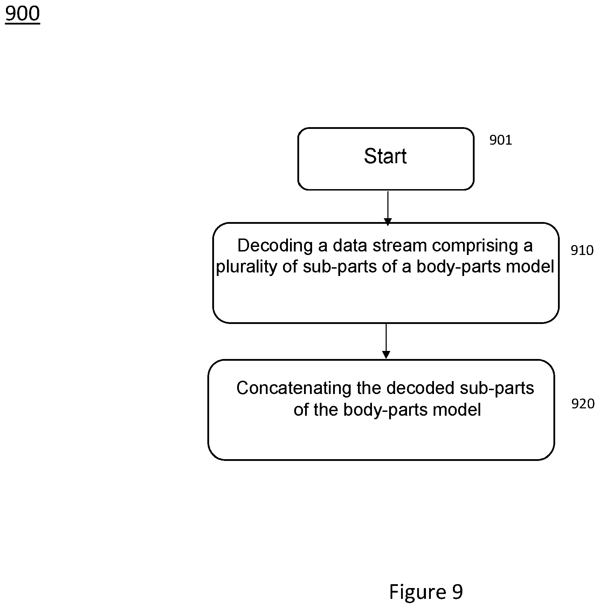

One embodiment of a method 900 under the general aspects described here is shown in Figure 9. The method commences at start block 901 and control proceeds to block 910 for decoding a data stream comprising a plurality of sub-parts of a body-parts model. Control proceeds from block 910 to block 920 for concatenating the decoded sub-parts of the body-parts model.

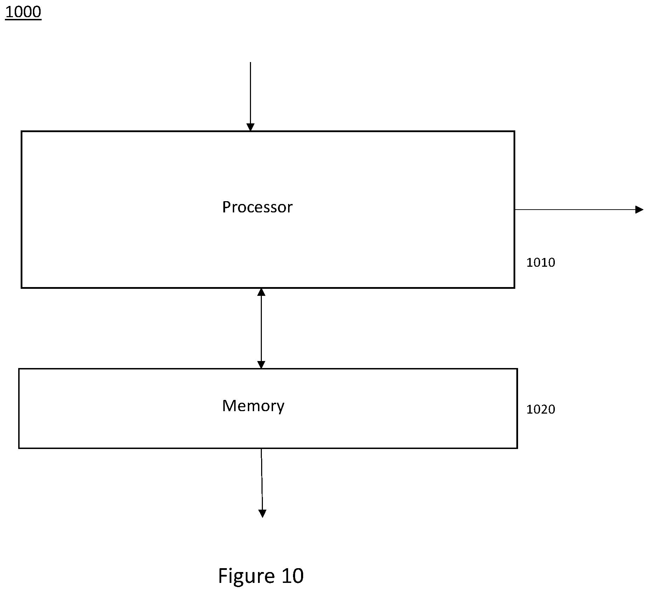

Figure 10 shows one embodiment of an apparatus 1000 for encoding, decoding, compressing, or decompressing, or filtering of video data using the aforementioned methods. The apparatus comprises Processor 1010 and can be interconnected to a memory 1020 through at least one port. Both Processor 1010 and memory 1020 can also have one or more additional interconnections to external connections.

Processor 1010 is also configured to either insert or receive information in a bitstream and, either compressing, encoding, or decoding using any of the described aspects.

The embodiments described here include a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

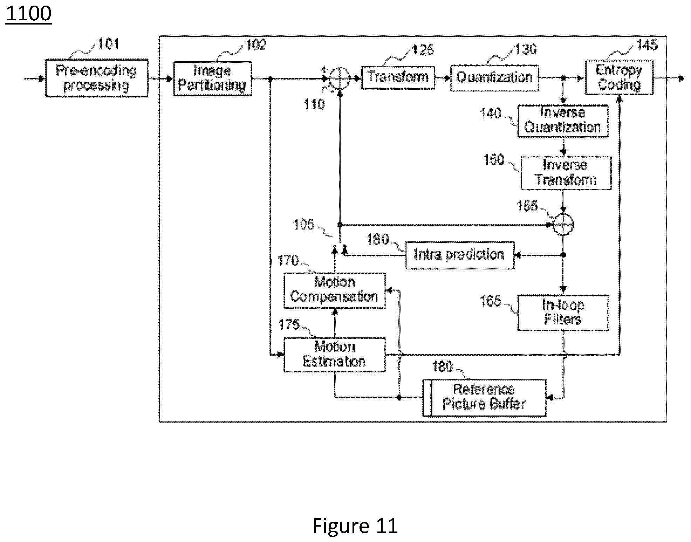

The aspects described and contemplated in this application can be implemented in many different forms. Figures 11, 12, and 13 provide some embodiments, but other embodiments are contemplated and the discussion of Figures 11, 12, and 13 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

While the invention is described in terms of video broadcasts and video streams, it would equally be possible to describe a substantially similar reporting structure for other media types. For example, the present invention relies on frame numbers and frame counters to determine to which section of the video a given report pertains. The same functionality can be obtained by using time stamps, time markers or time tags. An example is SMPTE time code, as defined in the SMPTE 12M-1 and SMPTE 12M-2 standards. Likewise, time stamps used in streaming protocols could be used to align the reporting with the chunks or segments created by such protocols. The use of time stamps further enables the invention to be used for audio and eventually other linear and non-linear media types.

In the present application, the terms "reconstructed" and "decoded" may be used interchangeably, the terms "pixel" and "sample" may be used interchangeably, the terms "image," "picture" and "frame" may be used interchangeably. Usually, but not necessarily, the term "reconstructed" is used at the encoder side while "decoded" is used at the decoder side.

Various methods are described herein, and each of the methods comprises one or more steps or actions for achieving the described method. Unless a specific order of steps or actions is required for proper operation of the method, the order and/or use of specific steps and/or actions may be modified or combined.

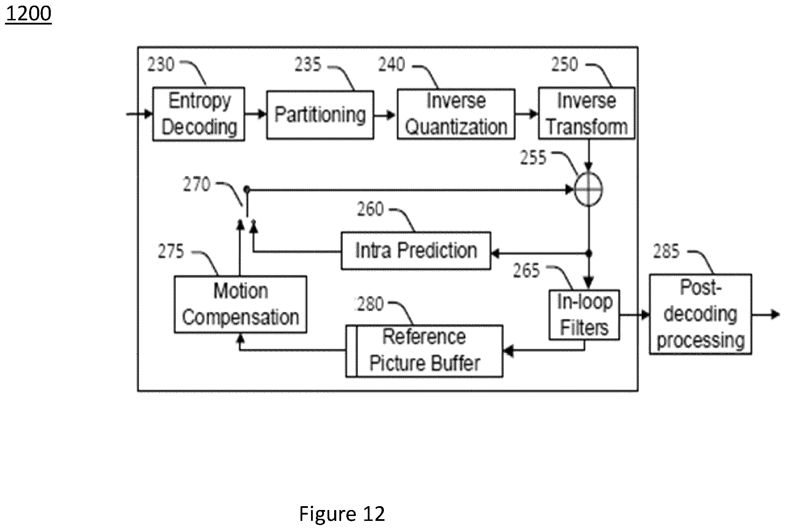

Various methods and other aspects described in this application can be used to modify modules, for example, the intra prediction, entropy coding, and/or decoding modules (160, 260, 145, 230), of a video encoder 100 and decoder 200 as shown in Figure 11 and Figure 12. Moreover, the present aspects are not limited to WC or HEVC, and can be applied, for example, to other standards and recommendations, whether pre-existing or future-developed, and extensions of any such standards and recommendations (including WC and HEVC). Unless indicated otherwise, or technically precluded, the aspects described in this application can be used individually or in combination.

Various numeric values are used in the present application. The specific values are for example purposes and the aspects described are not limited to these specific values.

Figure 11 illustrates an encoder 1100. Variations of this encoder 1100 are contemplated, but the encoder 1100 is described below for purposes of clarity without describing all expected variations.

Before being encoded, the video sequence may go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the preprocessing and attached to the bitstream.

In the encoder 1100, a picture is encoded by the encoder elements as described below. The picture to be encoded is partitioned (102) and processed in units of, for example, CUs. Each unit is encoded using, for example, either an intra or inter mode. When a unit is encoded in an intra mode, it performs intra prediction (160). In an inter mode, motion estimation (175) and compensation (170) are performed. The encoder decides (105) which one of the intra mode or inter mode to use for encoding the unit, and indicates the intra/inter decision by, for example, a prediction mode flag. Prediction residuals are calculated, for example, by subtracting (110) the predicted block from the original image block.

The prediction residuals are then transformed (125) and quantized (130). The quantized transform coefficients, as well as motion vectors and other syntax elements, are entropy coded (145) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture to perform, for example, deblocking/SAO (Sample Adaptive Offset) filtering to reduce encoding artifacts. The filtered image is stored at a reference picture buffer (180).

Figure 12 illustrates a block diagram of a video decoder 1200. In the decoder 1200, a bitstream is decoded by the decoder elements as described below. Video decoder 1200 generally performs a decoding pass reciprocal to the encoding pass as described in Figure 11. The encoder 1100 also generally performs video decoding as part of encoding video data.

In particular, the input of the decoder includes a video bitstream, which can be generated by video encoder 100. The bitstream is first entropy decoded (230) to obtain transform coefficients, motion vectors, and other coded information. The picture partition information indicates how the picture is partitioned. The decoder may therefore divide (235) the picture according to the decoded picture partitioning information. The transform coefficients are de-quantized (240) and inverse transformed (250) to decode the prediction residuals. Combining (255) the decoded prediction residuals and the predicted block, an image block is reconstructed. The predicted block can be obtained (270) from intra prediction (260) or motion-compensated prediction (i.e., inter prediction) (275). In-loop filters (265) are applied to the reconstructed image. The filtered image is stored at a reference picture buffer (280).

The decoded picture can further go through post-decoding processing (285), for example, an inverse color transform (e.g. conversion from YcbCr 4:2:0 to RGB 4:4:4) or an inverse remapping performing the inverse of the remapping process performed in the pre-encoding processing (101). The post-decoding processing can use metadata derived in the pre-encoding processing and signaled in the bitstream.

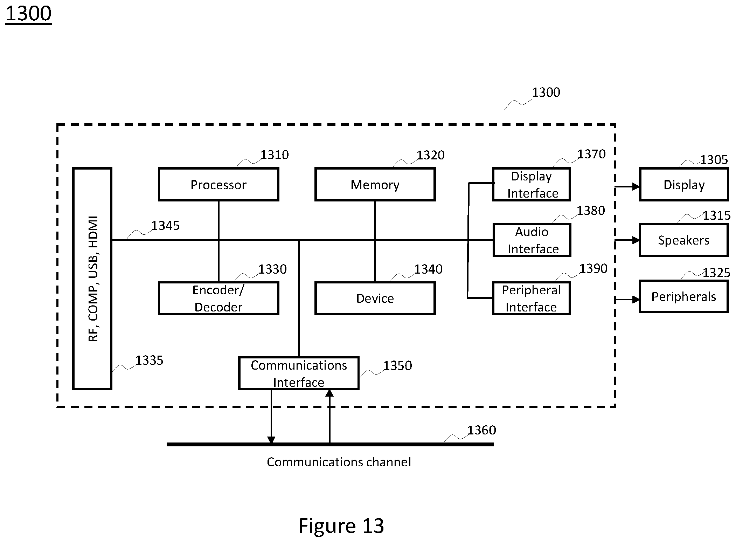

Figure 13 illustrates a block diagram of an example of a system in which various aspects and embodiments are implemented. System 1300 can be embodied as a device including the various components described below and is configured to perform one or more of the aspects described in this document. Examples of such devices include, but are not limited to, various electronic devices such as personal computers, laptop computers, smartphones, tablet computers, digital multimedia set top boxes, digital television receivers, personal video recording systems, connected home appliances, and servers. Elements of system 1300, singly or in combination, can be embodied in a single integrated circuit (IC), multiple ICs, and/or discrete components. For example, in at least one embodiment, the processing and encoder/decoder elements of system 1000 are distributed across multiple ICs and/or discrete components. In various embodiments, the system 1300 is communicatively coupled to one or more other systems, or other electronic devices, via, for example, a communications bus or through dedicated input and/or output ports. In various embodiments, the system 1300 is configured to implement one or more of the aspects described in this document.

The system 1300 includes at least one processor 1310 configured to execute instructions loaded therein for implementing, for example, the various aspects described in this document. Processor 1310 can include embedded memory, input output interface, and various other circuitries as known in the art. The system 1300 includes at least one memory 1320 (e.g., a volatile memory device, and/or a non-volatile memory device). System 1300 includes a storage device 1340, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1340 can include an internal storage device, an attached storage device (including detachable and non-detachable storage devices), and/or a network accessible storage device, as non-limiting examples.

System 1300 includes an encoder/decoder module 1330 configured, for example, to process data to provide an encoded video or decoded video, and the encoder/decoder module 1330 can include its own processor and memory. The encoder/decoder module 1330 represents module(s) that can be included in a device to perform the encoding and/or decoding functions. As is known, a device can include one or both of the encoding and decoding modules. Additionally, encoder/decoder module 1330 can be implemented as a separate element of system 1300 or can be incorporated within processor 1310 as a combination of hardware and software as known to those skilled in the art.

Program code to be loaded onto processor 1310 or encoder/decoder 1330 to perform the various aspects described in this document can be stored in storage device 1340 and subsequently loaded onto memory 1320 for execution by processor 1310. In accordance with various embodiments, one or more of processor 1310, memory 1320, storage device 1340, and encoder/decoder module 1330 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1310 and/or the encoder/decoder module 1330 is used to store instructions and to provide working memory for processing that is needed during encoding or decoding. In other embodiments, however, a memory external to the processing device (for example, the processing device can be either the processor 1310 or the encoder/decoder module 1330) is used for one or more of these functions. The external memory can be the memory 1320 and/or the storage device 1340, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1300 can be provided through various input devices as indicated in block 1335. Such input devices include, but are not limited to, (i) a radio frequency (RF) portion that receives an RF signal transmitted, for example, over the air by a content provider, (ii) a Component (COMP) input terminal (or a set of COMP input terminals), (iii) a Universal Serial Bus (USB) input terminal, and/or (iv) a High-Definition Multimedia Interface (HDMI) input terminal. Other examples, not shown in Figure 13, include composite video.

In various embodiments, the input devices of block 1335 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1300 to other electronic devices across USB and/or HDMI connections. It is to be understood that various aspects of input processing, for example, Reed-Solomon error correction, can be implemented, for example, within a separate input processing IC or within processor 1310 as necessary. Similarly, aspects of USB or HDMI interface processing can be implemented within separate interface ICs or within processor 1310 as necessary. The demodulated, error corrected, and demultiplexed stream is provided to various processing elements, including, for example, processor 1310, and encoder/decoder 1330 operating in combination with the memory and storage elements to process the datastream as necessary for presentation on an output device.

Various elements of system 1300 can be provided within an integrated housing, Within the integrated housing, the various elements can be interconnected and transmit data therebetween using suitable connection arrangement, for example, an internal bus as known in the art, including the Inter-IC (I2C) bus, wiring, and printed circuit boards.

The system 1300 includes communication interface 1350 that enables communication with other devices via communication channel 1360. The communication interface 1350 can include, but is not limited to, a transceiver configured to transmit and to receive data over communication channel 1360. The communication interface 1350 can include, but is not limited to, a modem or network card and the communication channel 1360 can be implemented, for example, within a wired and/or a wireless medium.

Data is streamed, or otherwise provided, to the system 1300, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1360 and the communications interface 1350 which are adapted for Wi-Fi communications. The communications channel 1360 of these embodiments is typically connected to an access point or router that provides access to external networks including the Internet for allowing streaming applications and other over-the-top communications. Other embodiments provide streamed data to the system 1300 using a set-top box that delivers the data over the HDMI connection of the input block 1335. Still other embodiments provide streamed data to the system 1300 using the RF connection of the input block 1335. As indicated above, various embodiments provide data in a non-streaming manner. Additionally, various embodiments use wireless networks other than Wi-Fi, for example a cellular network or a Bluetooth network.

The system 1300 can provide an output signal to various output devices, including a display 1305, speakers 1315, and other peripheral devices 1325. The display 1305 of various embodiments includes one or more of, for example, a touchscreen display, an organic light-emitting diode (OLED) display, a curved display, and/or a foldable display. The display 1305 can be for a television, a tablet, a laptop, a cell phone (mobile phone), or another device. The display 1305 can also be integrated with other components (for example, as in a smart phone), or separate (for example, an external monitor for a laptop). The other peripheral devices 1325 include, in various examples of embodiments, one or more of a stand-alone digital video disc (or digital versatile disc) (DVR, for both terms), a disk player, a stereo system, and/or a lighting system. Various embodiments use one or more peripheral devices 1325 that provide a function based on the output of the system 1300. For example, a disk player performs the function of playing the output of the system 1300.

In various embodiments, control signals are communicated between the system 1300 and the display 1305, speakers 1315, or other peripheral devices 1325 using signaling such as AV.Link, Consumer Electronics Control (CEC), or other communications protocols that enable device-to-device control with or without user intervention. The output devices can be communicatively coupled to system 1300 via dedicated connections through respective interfaces 1370, 1380, and 1390. Alternatively, the output devices can be connected to system 1300 using the communications channel 1360 via the communications interface 1350. The display 1305 and speakers 1315 can be integrated in a single unit with the other components of system 1300 in an electronic device such as, for example, a television. In various embodiments, the display interface 1370 includes a display driver, such as, for example, a timing controller (T Con) chip.

The display 1305 and speaker 1315 can alternatively be separate from one or more of the other components, for example, if the RF portion of input 1335 is part of a separate set-top box. In various embodiments in which the display 1305 and speakers 1315 are external components, the output signal can be provided via dedicated output connections, including, for example, HDMI ports, USB ports, or COMP outputs.

The embodiments can be carried out by computer software implemented by the processor 1310 or by hardware, or by a combination of hardware and software. As a non-limiting example, the embodiments can be implemented by one or more integrated circuits. The memory 1320 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1310 can be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments may refer to parametric models or rate distortion optimization. In particular, during the encoding process, the balance or trade-off between the rate and distortion is usually considered, often given the constraints of computational complexity. It can be measured through a Rate Distortion Optimization (RDO) metric, or through Least Mean Square (LMS), Mean of Absolute Errors (MAE), or other such measurements. Rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of a plurality of transforms, coding modes or flags. In this way, in an embodiment the same transform, parameter, or mode is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

The preceding sections describe a number of embodiments, across various claim categories and types. Features of these embodiments can be provided alone or in any combination. Further, embodiments can include one or more of the following features, devices, or aspects, alone or in any combination, across various claim categories and types:
At least one embodiment comprises splitting a body parts model of an input animation into a plurality of sub-parts and encoding the plurality of sub-parts
At least one embodiment comprises decoding data comprising a plurality of sub-parts of a body-parts model and, concatenating the decoded sub-parts of the body-parts model.

At least one embodiment comprises any encoding or decoding of the information based on the above operations.

At least one embodiment comprises a bitstream or signal that includes one or more of the described information elements, or variations thereof.

At least one embodiment comprises a bitstream or signal that includes syntax conveying information generated according to any of the embodiments described.

At least one embodiment comprises creating and/or transmitting and/or receiving and/or decoding according to any of the embodiments described.

At least one embodiment comprises a method, process, apparatus, medium storing instructions, medium storing data, or signal according to any of the embodiments described.

At least one embodiment comprises inserting in the signaling syntax elements that enable the decoder to determine decoding information in a manner corresponding to that used by an encoder.

At least one embodiment comprises creating and/or transmitting and/or receiving and/or decoding a bitstream or signal that includes one or more of the described syntax elements, or variations thereof.

At least one embodiment comprises a TV, set-top box, cell phone, tablet, or other electronic device that performs transform method(s) according to any of the embodiments described.

At least one embodiment comprises a TV, set-top box, cell phone, tablet, or other electronic device that performs transform method(s) determination according to any of the embodiments described, and that displays (e.g., using a monitor, screen, or other type of display) a resulting image.

At least one embodiment comprises a TV, set-top box, cell phone, tablet, or other electronic device that selects, bandlimits, or tunes (e.g., using a tuner) a channel to receive a signal including an encoded image, and performs transform method(s) according to any of the embodiments described.

At least one embodiment comprises a TV, set-top box, cell phone, tablet, or other electronic device that receives (e.g., using an antenna) a signal over the air that includes an encoded image, and performs transform method(s).

## Claims

1. A method, comprising:
splitting a body parts model of an input animation into a plurality of sub-parts; and,
encoding the plurality of sub-parts.

2. An apparatus, comprising a memory and a processor, configured to:
split a body parts model of an input animation into a plurality of sub-parts; and,
encode the plurality of sub-parts.

3. A method, comprising:
decoding a data stream comprising a plurality of sub-parts of a body-parts model; and,
concatenating the decoded sub-parts of the body-parts model.

4. An apparatus, comprising a memory and a processor, configured to:
decode a data stream comprising a plurality of sub-parts of a body-parts model; and,
concatenate the decoded sub-parts of the body-parts model.

5. The method of any one of claims 1 or 3, or the apparatus of any one of claims 2 or 4, further comprising:
training a body parts model representative of a human skeleton using corresponding sub-parts of the plurality of sub-parts, wherein said training is independent of other sub-parts of the body parts model.

6. The method of any one of claims 1 or 3, or the apparatus of any one of claims 2 or 4, further comprising:
training a body parts model representative of a human skeleton using weighted sub-parts of the plurality of sub-parts, wherein said training is independent of other sub-parts of the body parts model.

7. The method of any one of Claims 1 or 3 or 5 through 6, or the apparatus of any one of Claims 2 or 4 through 6, wherein a portion of the body parts model is trained with at least one sub-part of the input animation and at least one other portion is trained with a corresponding sub-part.

8. A device comprising:
an apparatus according to Claim 2; and
at least one of (i) an antenna configured to receive a signal, the signal including a video block, (ii) a band limiter configured to limit the received signal to a band of frequencies that includes the video block, and (iii) a display configured to display an output representative of the video block.

9. A non-transitory computer readable medium containing data content generated according to the method of any one of claims 1, 3, or 5 through 7, or by the apparatus of any one of claims 2, 4, or 5 through 7, for playback using a processor.

10. A signal comprising video data generated according to the method of any one of claims 1, or 3, or 5 through 7, or by the apparatus of any one of claims 2, or 4, or 5 through 7, for playback using a processor.

11. A computer program product comprising instructions which, when the program is executed by a computer, cause the computer to carry out the method of any one of claims 1, or 3 or 5 through 7.
